(19) Europäisches Patentamt
European Patent Office
Office européen des brevets

(11) **EP 3 914 899 B1**

(12) **EUROPÄISCHE PATENTSCHRIFT**

(45) Veröffentlichungstag und Bekanntmachung des Hinweises auf die Patenterteilung:
**03.08.2022 Patentblatt 2022/31**

(21) Anmeldenummer: **20702746.7**

(22) Anmeldetag: **23.01.2020**

(51) Internationale Patentklassifikation (IPC):
**G01N 21/21** (2006.01)

(52) Gemeinsame Patentklassifikation (CPC):
**G01N 21/211; G01J 4/04**

(86) Internationale Anmeldenummer:
**PCT/EP2020/051566**

(87) Internationale Veröffentlichungsnummer:
**WO 2020/152241 (30.07.2020 Gazette 2020/31)**

(54) **VERFAHREN ZUR ELLIPSOMETRISCHEN BESTIMMUNG VON EIGENSCHAFTEN EINER PROBE**

METHOD FOR DETERMINING PROPERTIES OF A SAMPLE BY ELLIPSOMETRY

PROCÉDÉ DE DÉTERMINATION ELLIPSOMÉTRIQUE DES PROPRIÉTÉS D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.01.2019 DE 102019101650**

(43) Veröffentlichungstag der Anmeldung:
**01.12.2021 Patentblatt 2021/48**

(73) Patentinhaber: **Accurion GmbH**
**37079 Göttingen (DE)**

(72) Erfinder: **DUWE, Matthias**
**34131 Kassel (DE)**

(74) Vertreter: **Schneider, Peter Christian**
**Fiedler, Ostermann & Schneider**
**Patentanwälte**
**Obere Karspüle 41**
**37073 Göttingen (DE)**

(56) Entgegenhaltungen:
- LI WEIQI ET AL: "Characterization of curved surface layer by Mueller matrix ellipsometry", JOURNAL OF VACUUM SCIENCE & TECHNOLOGY B: MICROELECTRONICS AND NANOMETER STRUCTURES, AMERICAN INSTITUTE OF PHYSICS, 2 HUNTINGTON QUADRANGLE, MELVILLE, NY 11747, Bd. 34, Nr. 2, 16. März 2016 (2016-03-16), XP012211268, ISSN: 2166-2746, DOI: 10.1116/1.4943952 [gefunden am 1901-01-01] in der Anmeldung erwähnt
- TOSHIHIDE TSURU ET AL: "Tilt-ellipsometry of object surface by specular reflection for three-dimensional shape measurement", OPTICS EXPRESS, Bd. 21, Nr. 5, 8. März 2013 (2013-03-08), Seiten 6625-6632, XP055685615, in der Anmeldung erwähnt
- DUWE MATTHIAS ET AL: "Thin-film metrology of tilted and curved surfaces by imaging Mueller-matrix ellipsometry", JOURNAL OF VACUUM SCIENCE & TECHNOLOGY B: MICROELECTRONICS AND NANOMETER STRUCTURES, AMERICAN INSTITUTE OF PHYSICS, 2 HUNTINGTON QUADRANGLE, MELVILLE, NY 11747, Bd. 37, Nr. 6, 11. Oktober 2019 (2019-10-11), XP012241328, ISSN: 2166-2746, DOI: 10.1116/1.5122757 [gefunden am 2019-10-11]

**EP 3 914 899 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft Verfahren zur ellipsometrischen Bestimmung von Eigenschaften einer Probe, umfassend die Schritte:

- Positionieren der Probe in einem Ellipsometer, wobei die Flächennormale eines Messbereichs der Probenoberfläche gegenüber der Referenzachse des Ellipsometers verkippt ist,
- Messen der Mueller-Matrix für den Messbereich,
- Aufstellen eines zumindest nicht unterbestimmten Gleichungssystems entsprechend der Gleichsetzung der gemessenen Mueller-Matrix mit einem Matrizenprodukt aus

   + einer Rotationsmatrix um einen Eingangs-Rotationswinkel,
   + einer isotropen Mueller-Matrix in normierter NCS-Form und
   + einer Rotationsmatrix um einen Ausgangs-Rotationswinkel,

- Lösen des Gleichungssystems nach die zu bestimmenden Probeneigenschaften repräsentierenden Parametern

Stand der Technik

Ein derartiges Verfahren ist bekannt aus W. Li et. al.: Characterization of curved surface layer by Mueller matrix ellipsometry", Journal of Vacuum Science & Technology B 34, 020602 (2016); http://dx.doi.org/10.1116/1.4943952.

Die Ellipsometrie, insbesondere die bildgebende Ellipsometrie, ist ein seit langem etabliertes Verfahren zur Bestimmung von optischen und geometrischen Eigenschaften einer Probe, insbesondere von dünnen Schichten. Beispielsweise ist die Bestimmung der Dicke und/oder des Brechungsindex von Beschichtungen ein typischer Gegenstand ellipsometrischer Untersuchungen, die z.B. im Rahmen von Qualitätskontrollmaßnahmen, etwa bei der Herstellung vergüteter Oberflächen, Anwendung finden können.

Die Bestimmung der Probeneigenschaften erfolgt auf Basis einer Analyse des winkelabhängigen Reflexionsverhaltens der Probe. Dabei wird elektromagnetische Strahlung, z.B. ein ggf. aufgeweiteter Laserstrahl, mit definiertem Polarisationszustand auf die Probe, nämlich auf einen hier als Messbereich bezeichneten Teilbereich ihrer Oberfläche, geführt und die Veränderung des Polarisationszustandes der elektromagnetischen Strahlung nach Interaktion mit bzw. Reflexion an der Probe gemessen. Technisch relevante Probeneigenschaften, die mit diesem Verfahren in hoher Präzision bestimmt werden können, sind bspw. die Schichtdicken wenigstens semitransparenter Schichten bzw. von Schichtsystemen oder die optischen bzw. dielektrischen Konstanten nahezu beliebiger Materialien.

Die Ellipsometrie ist ein indirektes Messverfahren, dessen Auswertung auf einer Modelloptimierung basiert. Die je nach Verfahrensprinzip unterschiedlichen Messgrößen werden in die ellipsometrischen Transfergrößen $\Psi$ (Psi, Amplitudeninformation) und $\Delta$ (Delta, Phaseninformation) umgewandelt, aus denen die interessierenden Probeneigenschaften über einen parametrisierten Fit, d.h. durch ein numerisches Fehlerminimierungsverfahren unter Variation von Parametern eines Probenmodells, bestimmt werden.

Das grundlegende Prinzip der Ellipsometrie und insbesondere auch der Aufbau eines auf diesem Prinzip basierenden Messgerätes, allgemein als Ellipsometer bezeichnet, ist dem Fachmann bekannt. Stellvertretend hierzu sei auf die DIN 50989-1:2018-01 verwiesen, die auch die allgemein übliche, hier verwendete Nomenklatur, insbesondere auch in Bezug auf den hier zugrunde gelegten Mueller-Formalismus, vorgibt.

Eine Sonderform der Ellipsometrie stellt die sog. abbildende Ellipsometrie dar. Hier wird der beleuchtete Messbereich mittels einer Abbildungsoptik auf einen zweidimensional auflösenden Detektor abgebildet, so dass simultan für jeden Punkt des Messbereichs ein nicht-abbildendes ellipsometrisches Messverfahren durchgeführt werden kann, bei dem jedes Detektor-Pixel als nicht-abbildender Detektor für den jeweils zugeordneten Messbereichspunkt wirkt und sich die bildgebende Wirkung durch geordnete Zusammenschau der Detektor-Pixel ergibt. Alternativ kann im Rahmen einer abbildenden Ellipsometrie auch eine die Probenoberfläche abrasternde Beleuchtung Einsatz finden. Die Detektion erfolgt in diesem Fall entweder nicht-bildgebend mit anschließendem, geordnetem Zusammensetzen der punktweise ermittelten Messergebnisse zu sog. Maps (man spricht dabei auch von "Stitching"), oder die Detektion erfolgt unmittelbar bildgebend, d.h. mittels eines zweidimensional auflösenden Detektors.

Ellipsometrische Messungen sind stets mit speziellen Winkeleinstellungen verbunden. Es sind dies insbesondere Einstellungen des nominellen Einfallswinkels des Beleuchtungslichts, des nominellen Ausfallswinkels des Detektionslichts und der Polarisationswinkel an Polarisator und Analysator. Als nomineller Einfalls- bzw. Ausfallswinkel sei die Winkellage des entsprechenden Lichts zu einer Referenzachse des Ellipsometers verstanden. Die Referenzachse ist diejenige Achse, auf die das Ellipsometer kalibriert ist. Typischerweise wird die Referenzachse so gewählt, dass sie mit der Flächennormalen einer flachen Probenoberfläche zusammenfällt. Dies, d.h. eine flache Probe, ist auch der typische und im Stand der Technik gut beherrschte Anwendungsfall.

In der Praxis sieht sich der Fachmann jedoch häufig mit der Aufgabe konfrontiert, gewölbte Oberflächen ellipsometrisch vermessen zu müssen. Rein beispielhaft sei hier die Qualitätskontrolle von Vergütungs-Beschichtungen auf - ggf. asphärisch - gekrümmten Linsen genannt. Hierzu wird die Probe üblicherweise sukzessive, jeweils ausschnittsweise vermessen, wobei vor jeder Messung eine Repositionierung der Probe erfolgt, so dass ihre Oberflächennormale im Messbereich mit der Referenzachse des Ellipsometers zusammenfällt.

Beispielsweise beschreibt die US 7,800,756 B2 ein Verfahren, bei dem die Probe mit einer geeigneten Vorrichtung so positioniert wird, dass nacheinander unterschiedliche Stellen der Probe in Bezug auf das abtastende Ellipsometer korrekt, d.h. mit zur Referenzachse des Ellipsometers deckungsgleichen Oberflächennormalen, ausgerichtet sind.

Die US 6,741,353 B1 beschreibt ein weiteres Verfahren bei dem ebenfalls die Probe motorisch so positioniert wird, dass die einzelnen Punkte der Oberfläche nacheinander korrekt ausgerichtet sind. Hierbei gilt die zusätzliche Einschränkung, dass die zu vermessenden Objekte mindestens eine Symmetrieachse aufweisen müssen.

Diese Verfahren sind apparativ aufwendig und in der Anwendung langsam.

Die US 7,768,660 B1 beschreibt ein Verfahren zur Vermessung einer Beschichtung auf der Innenseite eines Zylinders. Hierbei wird die Probe allerdings von vorneherein so ausgerichtet, dass die nicht gekrümmte Achse des Zylinders parallel zur Strahlausbreitungsrichtung liegt. Der Einfluss der zweiten, gekrümmten Zylinderachse wird vernachlässigt, da der Krümmungsradius in Relation zum Messbereich als groß angesehen wird.

Die eingangs genannte, gattungsbildende Druckschrift offenbart einen weniger apparativ, sondern eher mathematischen, auswertungsbezogenen Ansatz, um die ellipsometrische Vermessung gekrümmter Oberflächen zu ermöglichen. Das entsprechende Verfahren soll hier als "Verfahren nach Li" angesprochen werden.

Beim Verfahren nach Li wird die zu vermessende Probe in einem Ellipsometer positioniert, wobei zumindest Ausschnitte der Probenoberfläche nicht im oben erläuterten Sinne korrekt ausgerichtet sind. Die weitere Betrachtung konzentriert sich auf solche gegen die Referenzachse verkippte Messbereiche.

Für einen solchen Messbereich wird die sog. Mueller-Matrix gemessen. Das hinter dem verkürzten Ausdruck "Messen der Mueller-Matrix" stehende Verfahren ist dem Fachmann bekannt und wird z.B. in Tompkins, H.G., Irene, E.A.: Handbook of ellipsometry; William Andrew Pub.; Springer, Norwich, NY; Heidelberg, Germany (2005) erläutert. Allgemein gesprochen verbirgt sich dahinter eine Anweisung zur Durchführung mehrerer Messvorgänge an der Probe im Ellipsometer mit jeweils unterschiedlichen Einstellungen von nominellen Polarisationswinkeln. Die einzelnen Messergebnisse werden in vorgegebener Weise zum Aufbau einer 4x4-Matrix benutzt. Die resultierende 4x4-Matrix wird hier als die "gemessene Mueller-Matrix" bezeichnet. Der Begriff ist insofern weit zu verstehen, als aus nachfolgend noch näher erläuterten Gründen zumindest im Rahmen der Erfindung nicht die Kenntnis, d.h. die Messung und der Aufbau, der vollständigen Mueller-Matrix erforderlich ist, sondern die Kenntnis einer teilweisen Mueller-Matrix genügt, sofern wenigstens fünf Matrix-Elemente mit Werten besetzt werden.

Die gemessene Mueller-Matrix wird alsdann zum Aufstellen eines Gleichungssystems genutzt, indem die gemessene Mueller-Matrix mit einem nachfolgend erläuterten Matrizenprodukt gleichgesetzt wird. Das resultierende (bis zu 16 Einzelgleichungen umfassende) Gleichungssystem ergibt sich aus den bekannten Vorschriften der MatrizenMultiplikation. Hintergrund dieser Maßnahme ist die Vorstellung, dass die gemessene Mueller-Matrix einer idealen, d.h. isotropen, normierten und die Probe charakterisierenden Mueller-Matrix entspricht, die im Rahmen der (fehlausgerichteten) Messung einer Koordinaten-Transformation, insbesondere einer Eingangs- und einer Ausgangs-Rotation um denselben Rotationswinkel $\alpha$ (abgesehen von dessen Vorzeichen) unterworfen wurde. Mathematisch formuliert verfolgt das Verfahren nach Li den Ansatz:

$$M'_{\Delta,\Psi} = M_{out}^{trans} \cdot M_{\Delta,\Psi} \cdot M_{in}^{trans} , \qquad (1)$$

wobei $M_{in}^{trans}$ und $M_{out}^{trans}$ die Mueller-Matrizen für die oben genannten eingangsseitige und ausgangsseitige Koordinatentransformationen (vom Koordinatensystem des Ellipsometers in das Eigensystem der Probe und umgekehrt) repräsentieren. $M_{\Delta,\Psi}$ ist die Mueller-Matrix der isotropen Probe in deren Eigensystem. $M'_{\Delta,\Psi}$ ist die gemessene Mueller-Matrix.

Der Begriff "Eigensystem der Probe" meint in diesem Zusammenhang die eingangsseitigen und ausgangsseitigen kartesischen Koordinatensysteme, die durch die jeweiligen p- und s-Vektoren (parallele bzw. senkrechte Polarisationskomponenten) sowie die jeweilige Ausbreitungsrichtung des einfallenden und reflektierten Lichtstrahls auf die Probe definiert werden. Analog entspricht das "Eigensystem des Ellipsometers" dem Eigensystem der Probe, wenn die Probennormale der (korrekten) Ausrichtung entspricht, auf die das Ellipsometer kalibriert wurde.

Die Gestalt der normierten (d.h. Element $m_{11} \equiv 1$) Mueller-Matrix einer isotropen Probe, die durch die ellipso-

metrischen Transfergrößen $\Delta$ und $\Psi$ charakterisiert ist und im Eigensystem der Probe beschrieben wird, ist aus der Fachliteratur bekannt:

$$M_{\Delta,\Psi} = \begin{pmatrix} 1 & -N & 0 & 0 \\ -N & 1 & 0 & 0 \\ 0 & 0 & C & S \\ 0 & 0 & -S & C \end{pmatrix}, \tag{2}$$

wobei die Parameter N, C, S definiert sind als

$$N = \cos 2\Psi$$
$$C = \sin 2\Psi \cos \Delta \tag{3}$$
$$S = \sin 2\Psi \sin \Delta .$$

Gemäß dem Verfahren nach Li werden, wie oben bereits erwähnt, zur Koordinaten-Transformation der isotropen Mueller-Matrix je eine Hin- bzw. Rück-Rotation um einen (unbekannten) Winkel $\alpha$ verwendet. Eine Rotations-Matrix im Mueller-Formalismus hat allgemein die Form

$$M_{in/out}^{trans} = R(\gamma) = \begin{pmatrix} 1 & 0 & 0 & 0 \\ 0 & \cos 2\gamma & \sin 2\gamma & 0 \\ 0 & -\sin 2\gamma & \cos 2\gamma & 0 \\ 0 & 0 & 0 & 1 \end{pmatrix}, \tag{4}$$

wie dies dem Fachmann ebenfalls bekannt ist.

Mit anderen Worten verfolgt das Verfahren nach Li den Ansatz:

$$M'_{\Delta,\Psi} =$$

$$\begin{pmatrix} 1 & 0 & 0 & 0 \\ 0 & \cos(-2\alpha) & \sin(-2\alpha) & 0 \\ 0 & -\sin(-2\alpha) & \cos(-2\alpha) & 0 \\ 0 & 0 & 0 & 1 \end{pmatrix} \begin{pmatrix} 1 & -N & 0 & 0 \\ -N & 1 & 0 & 0 \\ 0 & 0 & C & S \\ 0 & 0 & -S & C \end{pmatrix} \begin{pmatrix} 1 & 0 & 0 & 0 \\ 0 & \cos 2\alpha & \sin 2\alpha & 0 \\ 0 & -\sin 2\alpha & \cos 2\alpha & 0 \\ 0 & 0 & 0 & 1 \end{pmatrix}. \tag{5}$$

Das resultierende Gleichungssystem wird gemäß dem Verfahren nach Li gelöst, indem die gemäß einem Modell der Probe angenommenen Abhängigkeiten der Variablen des Gleichungssystems von den interessierenden Probenparametern, z.B. einer Schichtdicke, eingesetzt und die Parameter im Rahmen eines numerischen Fehlerminimierungsverfahrens so lange variiert werden, bis sich die wahrscheinlichste Lösung des Systems ergibt.

Das bekannte Verfahren ergibt in speziellen Fällen bekannter Probengeometrien brauchbare Ergebnisse, ist aber als allgemeiner Ansatz für die Vermessung beliebiger, insbesondere im Detail unbekannter Probengeometrien nicht einsetzbar.

Aus Tsuru, T.:"Tilt-ellipsometry of object surface by specular reflection for three-dimensional shape measurement", Optics Express, Vol. 21, 2013, No. 5, S. 6625-6632. DOI:10.1364/OE.21.006625 ist ein Verfahren zur 3D-Vemessung reflektierender Proben bekannt, bei dem die Probe mit zirkular polarisiertem Licht beleuchtet wird. Aus der Form der Polarisationsellipse des reflektierten Lichts soll dann auf die Lage der Flächennormalen am Beleuchtungsort geschlossen werden.

Aufgabenstellung

Es ist die Aufgabe der vorliegenden Erfindung, das bekannte Verfahren derart weiterzubilden, dass beliebige Proben, insbesondere mit im Detail unbekannter Geometrie ellipsometrisch vermessen werden können.

Darlegung der Erfindung

Diese Aufgabe wird in Verbindung mit den Merkmalen des Oberbegriffs von Anspruch 1 dadurch gelöst, dass beim Aufstellen des Gleichungssystems der Ausgangs-Rotationswinkel und der Eingangs-Rotationswinkels als voneinander unabhängige Parameter angesetzt werden.

Bevorzugte Ausführungsformen sind Gegenstand der abhängigen Ansprüche.

Der grundlegende Gedanke der vorliegenden Erfindung ist es, sich trotz seiner geometrisch begründeten Plausibilität von dem Li'schen Dogma der betragsmäßigen Gleichheit von Ein- und Ausgangs-Rotationswinkel zu lösen und diese Parameter im Gleichungssystem als unabhängig anzusetzen. Der Eingangs-Rotationswinkel sei hier als $\gamma$ und der Ausgangsrotationswinkel als $-\delta$ bezeichnet. Mit anderen Worten verfolgt die Erfindung den Ansatz

$$M'_{\Delta,\Psi} =$$

$$\begin{pmatrix} 1 & 0 & 0 & 0 \\ 0 & \cos(-2\delta) & \sin(-2\delta) & 0 \\ 0 & -\sin(-2\delta) & \cos(-2\delta) & 0 \\ 0 & 0 & 0 & 1 \end{pmatrix} \begin{pmatrix} 1 & -N & 0 & 0 \\ -N & 1 & 0 & 0 \\ 0 & 0 & C & S \\ 0 & 0 & -S & C \end{pmatrix} \begin{pmatrix} 1 & 0 & 0 & 0 \\ 0 & \cos 2\gamma & \sin 2\gamma & 0 \\ 0 & -\sin 2\gamma & \cos 2\gamma & 0 \\ 0 & 0 & 0 & 1 \end{pmatrix}. \qquad (6)$$

Hieraus ergeben sich überraschende Konsequenzen.

Beim Lösen des Gleichungssystems auf Basis eines modellbasierten Fehlerminimierungsverfahrens analog dem Verfahren nach Li führt der an dieser Stelle zusätzliche Freiheitsgrad zu einer deutlich verbesserten Übereinstimmung der gemessenen Werte mit den realen Werten außerhalb derjenigen Probengeometrien, für die auch das Verfahren nach Li tauglich ist.

Im Rahmen einer abbildenden Variante des erfindungsgemäßen Systems lassen sich also durch pixelweises Lösen des Gleichungssystems Maps erstellen, die jedem Probenpunkt einen Wert des interessierenden Parameters zuweisen.

Bereits in seiner zum Verfahren nach Li analogen Anwendung zeitigt das erfindungsgemäße Verfahren also deutliche Vorteile. Der erfindungsgemäße Ansatz ist jedoch auch die Grundlage für weitergehende Ausführungsformen, die im Stand der Technik völlig unbekannt sind.

So ist bei einer bevorzugten Ausführungsform der Erfindung vorgesehen, dass im Rahmen des Lösens des Gleichungssystems die Mueller-Parameter N, S, C und/oder die zu diesen äquivalenten ellipsometrischen Transfergrößen $\Delta$ und $\Psi$ explizit berechnet werden. Dies ist ohne weiteres möglich, weil das aufgestellte Gleichungssystem in der Regel über-, zumindest nicht unterbestimmt ist. Mit den Parametern N, S, C, $\gamma$, $\delta$ enthält es fünf Unbekannte, kann aber, je nach Vollständigkeit der gemessenen Mueller-Matrix, bis zu 16 Gleichungen umfassen. Auch ohne explizite Kenntnis der angesetzten Rotationswinkel $\gamma$, $\delta$ (eine entsprechende Vorkenntnis ist sogar bei unbekannter Probengeometrie prinzipiell unmöglich), lassen sich also die bei der Ellipsometrie typischerweise im Mittelpunkt des Interesses stehenden ellipsometrischen Transfergrößen $\Delta$ und $\Psi$ explizit berechnen. Insoweit ist der Begriff "Lösen des Gleichungssystems" weit zu verstehen und umfasst sämtliche dem Fachmann bekannten und ggf. noch unbekannten Verfahren zum numerischen oder analytischen Auffinden einer mathematischen direkten oder indirekten Lösung des Gleichungssystems.

Im Rahmen einer abbildenden Variante des erfindungsgemäßen Systems lassen sich also durch pixelweises Lösen des Gleichungssystems Maps erstellen, die jedem Probenpunkt einen $\Delta$- bzw. $\Psi$-Wert zuweisen.

Aus den berechneten ellipsometrischen Transfergrößen $\Delta$ und $\Psi$ lassen sich, wie im Rahmen einer bevorzugten Weiterbildung der Erfindung vorgesehen, optische und/oder geometrische Probeneigenschaften durch ein numerisches Fehlerminimierungsverfahren unter Variation von Parametern eines Probenmodells ermitteln. Dies entspricht der üblichen Verwendung der (auf beliebige Weise ermittelten) ellipsometrischen Transfergrößen $\Delta$ und $\Psi$. Durch den erfindungsgemäßen Ansatz lassen sich solche optischen und/oder geometrischen Probeneigenschaften nun jedoch auch für gekrümmte bzw. verkippte Oberflächen in hoher räumlicher Auflösung und mit sehr kurzer Messdauer bestimmen.

Bei einer bevorzugten Weiterbildung dieser Ausführungsform ist vorgesehen, dass im Rahmen des Fehlerminimierungsverfahrens der Einfallswinkel, mit dem der Beleuchtungsstrahl auf die Oberfläche des Messbereichs trifft, als zusätzlicher, zu variierender Parameter verwendet wird. Der Hintergrund lässt sich wie folgt erklären: Bei den berechneten Werten von $\Delta$ und $\Psi$ gilt zu beachten, dass diese Werte im Allgemeinen nicht identisch sind mit den Werten, die man bei einer korrekt ausgerichteten Probe messen würde. Dies ist darin begründet, dass die Werte von $\Delta$ und $\Psi$ im Allgemeinen Funktionen des Einfallswinkels des einfallenden Lichtstrahls sind. Die Neigung der Probe variiert jedoch per definitionem den Einfallswinkel gegenüber dem Fall der korrekt ausgerichteten Probe, so dass im Allgemeinen auch die Werte von $\Delta$ und $\Psi$ aufgrund der Oberflächenneigung von dem korrekt ausgerichteten Fall abweichen. Bei einem gut kalibrierten Ellipsometer ist im Fall der korrekt ausgerichteten Probe der Einfallswinkel mit einer gerätespezifischen Genauigkeit bekannt. Dieser Wert geht in der Regel bei einer weiteren Verwendung der Werte $\Delta$ und $\Psi$ im Rahmen des

o.g. modellbasierten Fehlerminimierungsverfahrens zur Ermittlung physikalischer Eigenschaften der Probe, z.B. einer Schichtdicke oder eines Brechungsindex, quantitativ in das Berechnungsergebnis ein. In dem Fall, in dem die Werte $\Delta$ und $\Psi$ mittels des erfindungsgemäßen Verfahrens bestimmt wurden, ist es somit für eine weitere Auswertung vorteilhaft, die Abweichung vom nominellen Einfallswinkel, der bei der Messung am Ellipsometer eingestellt wurde, als variablen Parameter einer Auswertung aus den Daten selbst mitzubestimmen (oder - alternativ - durch ein beliebiges anderweitiges Verfahren ergänzend zu bestimmen).

Wie erläutert, stellen die (unbekannten) Rotationswinkel $\gamma$ und $-\delta$, die mit dem erfindungsgemäßen Verfahrensansatz eingeführt werden, primär lediglich auswertungstechnische Hilfsgrößen dar, deren quantitative Kenntnis für die Ermittlung der traditionell im Fokus des Interesses stehenden ellipsometrischen Transfergrößen $\Delta$ und $\Psi$ nicht erforderlich ist. Bei einer günstigen und erst durch die Erfindung ermöglichten Variante ist gleichwohl vorgesehen, dass im Rahmen des Lösens des Gleichungssystems der Eingangs-Rotationswinkel $\gamma$ und der Ausgangs-Rotationswinkel $-\delta$ explizit berechnet werden. Die mathematische Möglichkeit dazu ergibt sich aus der Überbestimmtheit bzw. Nicht-Unterbestimmtheit des erfindungsgemäß angesetzten Gleichungssystems. Die explizite Kenntnis der Rotationswinkel $\gamma$ und $-\delta$ erlaubt es, aus ihnen die Orientierung der Flächennormalen der Probenoberfläche im Messbereich relativ zur Referenzachse des Ellipsometers zu berechnen. Im Rahmen einer abbildenden Verfahrensvariante ist es also möglich, für jeden Probenpunkt die Lage seiner Flächennormalen, mithin die Gesamt-Topologie der Probenoberfläche zu ermitteln. Die Umrechnung ist allerdings nicht trivial.

Die durch Lösen des Gleichungssystems berechneten Rotationswinkel $\gamma$ und $-\delta$ enthalten Informationen über die relative Orientierung der gemessenen Probenoberfläche, bezogen auf die bekannte Orientierung der Probennormalen im Falle einer korrekt ausgerichteten Probe, wenn folgende Winkeldefinition angesetzt wird:

$$\gamma = \text{sign}(\cos\phi)\cos^{-1}\left(\frac{\cos\Theta - \cos\varphi_0\cos\varphi_{eff}}{\sin\varphi_{eff}\sin\varphi_0}\right) \tag{7}$$

$$\delta = \text{sign}(\cos\phi)\cos^{-1}(\cos\delta) \tag{8}$$

mit

$$\cos\delta = \tag{9}$$

$$\frac{\cos\varphi_0\sin\varphi_0\cos\varphi_{eff}\ (\cos^2\phi\sin^2\Theta + 1) + (\cos\varphi_{eff}\cos\Theta + \cos\varphi_0\ \sin^2\varphi_0)\sin\phi\sin\Theta + \sin^3\varphi_0\cos\Theta}{\sin\varphi_{eff}\ (\sin\varphi_0\cos\varphi_{eff}\sin\phi\sin\Theta + \cos\varphi_0\cos\varphi_{eff}\cos\Theta + \sin^2\varphi_0\ )}$$

Dabei sind $\varphi_0$ der nominelle Einfallswinkel (d.h. der am Ellipsometer eingestellte Einfallswinkel), $\varphi_{eff}$ der effektive Einfallswinkel (ist gleich dem tatsächlichen Einfallswinkel) sowie $\Theta$ und $\Phi$ die Polar- und Azimutwinkel der Oberflächennormalen der Probe.

Der effektive Einfallswinkel $\varphi_{eff}$ ist ebenfalls eine Funktion von $\Theta$ und $\Phi$, nämlich:

$$\cos\varphi_{eff} = -\sin\varphi_0\sin\Theta\sin\phi + \cos\varphi_0\cos\Theta\ . \tag{10}$$

Somit lassen sich mit den Gleichungen (7) bis (10) die Mueller-Matrix-Rotationswinkel $\gamma$ und $\delta$ aus den Werten von $\Theta$ und $\Phi$ sowie $\varphi_0$ berechnen.

Gleichung (9) stellt eine Näherung für den ausgangsseitigen Mueller-Matrix-Rotationswinkel $\delta$ dar (nachfolgend als "Näherungsmodell 1" bezeichnet). Die Näherung besteht genau genommen darin, dass die angesetzte Rotationsmatrix gemäß Gleichung (4) streng mathematisch keine exakte Lösung für die oben genannte Ausgangstransformationsmatrix $M_{out}^{trans}$ sein kann. Die Gültigkeit der gemachten Näherung gemäß Gleichung (9) ließ sich jedoch experimentell bestätigen. Dennoch sind experimentelle Situationen denkbar, in denen andere Näherungsmodelle für den ausgangsseitigen Mueller-Matrix-Rotationswinkel $\delta$ genauere Berechnungen ermöglichen als das Näherungsmodell 1.

Daher wurde ein weiteres Näherungsmodell entwickelt (nachfolgend als "Näherungsmodell 2" bezeichnet), das den Rotationswinkel geometrisch anders motiviert und folgende Gleichung für den ausgangsseitigen Mueller-Matrix-Rotationswinkel $\delta$ liefert:

$$\cos \delta = \frac{(\cos \varphi_0 \sin \phi \sin \Theta - \sin \varphi_0 \cos \Theta) \cos 2\varphi_{eff} + \sin 2\varphi_0 \cos \varphi_{eff}}{\sqrt{\sin^2 \varphi_{eff} - \left[\cos 2\varphi_0 \cos \varphi_{eff} - \cos 2\varphi_{eff} (\sin \varphi_0 \sin \phi \sin \Theta + \cos \varphi_0 \cos \Theta)\right]^2}} \qquad (11)$$

mit den oben definierten Variablenbezeichnungen.

Somit lassen sich auch mit den Gleichungen (7), (8), (10) und (11) die Mueller-Matrix-Rotationswinkel $\gamma$ und $\delta$ aus den Werten von $\Theta$ und $\Phi$ sowie $\varphi_0$ berechnen.

Hat man bei einer Messung hingegen $\gamma$ und $\delta$ bei einem bekannten (weil eingestellten) $\varphi_0$ bestimmt, so bilden die obigen Gleichungen (7) und wahlweise (9) oder (11) ein Gleichungssystem, bestehend aus zwei Gleichungen in den beiden Unbekannten $\Theta$ und $\Phi$. Durch Lösen dieses Gleichungssystems bestimmt man also den Polar- und den Azimutwinkel der Oberflächennormalen und somit die Orientierung der Oberflächennormalen relativ zum Laborkoordinatensystem.

Weitere Einzelheiten und Vorteile der Erfindung ergeben sich aus der nachfolgenden speziellen Beschreibung und den Zeichnungen.

## Kurzbeschreibung der Zeichnungen

Es zeigen:

Figur 1:    eine schematische Darstellung des grundsätzlichen Aufbaus eines Ellipsometers,

Figur 2:    eine schematische Darstellung zur Illustration einer in herkömmlicher Weise korrekt ausgerichteten Probe,

Figur 3:    eine schematische Darstellung zur Illustration einer verkippt ausgerichteten Probe,

Figur 4:    eine schematische Darstellung zur Illustration des Eingangs-Rotationswinkel $\gamma$,

Figur 5:    eine schematische Darstellung zur Illustration des Ausgangs-Rotationswinkels $\delta$ gemäß Näherungsmodell 1 sowie

Figur 6:    eine schematische Darstellung zur Illustration des Ausgangs-Rotationswinkels $\delta$ gemäß Näherungsmodell 2.

## Ausführliche Beschreibung der Figuren

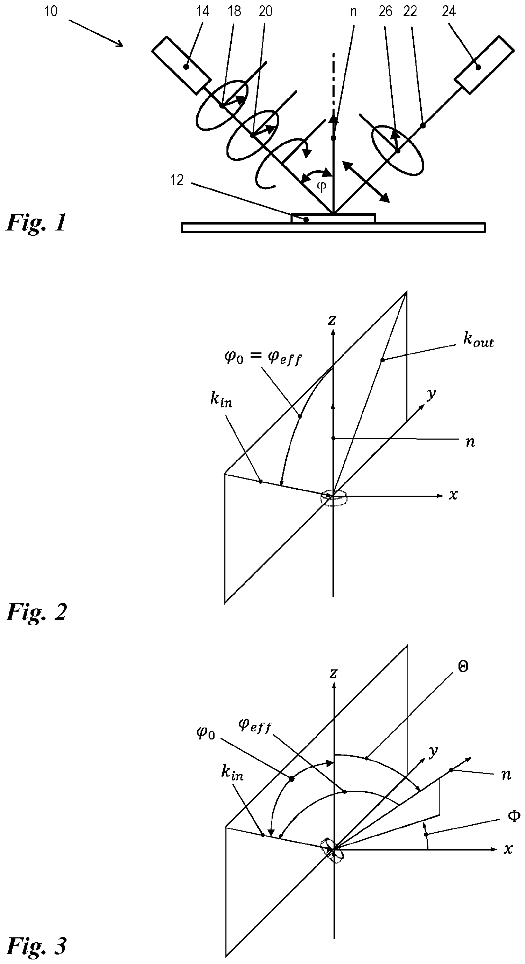

Die Figuren 1 bis 5 sollen zur Illustration und zur geometrischen Plausibilisierung von im Kontext der vorliegenden Erfindung relevanten Größen dienen.

Figur 1 zeigt den grundsätzlichen Aufbau eines Ellipsometers 10, wie es aus dem Stand der Technik bekannt ist und auch im Rahmen der vorliegenden Erfindung Einsatz finden kann. Eine Probe 12 mit einer Flächennormalen n wird aus einer Lichtquelle 14 mit einem Eingangsstrahl $k_{in}$ (Beleuchtungsstrahl) beleuchtet. Der einfallende Eingangsstrahl $k_{in}$ nimmt dabei einen Einfallswinkel $\varphi$ zur Probennormalen n ein. Mittels eines Polarisators 18 und eines nachgeschalteten Kompensators 20 erhält der einfallende Eingangsstrahl $k_{in}$ einen definierten, einstellbaren Polarisationszustand. Nach Reflexion an der Oberfläche der Probe 12 wird das Licht als Detektionsstrahl $k_{out}$ einem Detektor 24 zugeführt. Der Polarisationszustand des Lichts hat sich durch die Reflexion an der Probenoberfläche in einer Weise verändert, die charakteristisch für die physikalischen Eigenschaften der Probe, beispielsweise einer Beschichtungsdicke und/oder des optischen Brechungsindex, ist. Der Ausgangsstrahl $k_{out}$ (Detektionsstrahl) wird vor dem Detektor 24 durch einen Analysator 26 geleitet, dessen veränderbare Einstellung die polarisationsabhängige, zum Detektor 24 gelangende Intensität beeinflusst.

Die Darstellung von Figur 1 zeigt ein nicht-abbildendes Ellipsometer 10. Ein abbildendes Ellipsometer unterscheidet sich hiervon lediglich durch eine Abbildungsoptik zwischen der Probe 12 und dem Analysator 26 oder wahlweise zwischen dem Analysator 26 und dem Detektor 24 sowie durch einen bildgebenden Detektor 24.

Figur 2 zeigt in noch stärkerer Schematisierung die geometrischen Verhältnisse innerhalb eines Ellipsometers 10, wenn die Probe 12 in üblicher Weise "korrekt" ausgerichtet ist. Die hier mit z bezeichnete Referenzachse des Ellipsometers 10 fällt mit der Probennormalen n zusammen. Zugleich verlaufen der Eingangsstrahl $k_{in}$ sowie der Ausgangsstrahl $k_{out}$ in einer gemeinsamen Ebene, nämlich der yz-Ebene. Der tatsächliche Einfallswinkel $\varphi_{eff}$, den der Eingangsstrahl $k_{in}$ zur Probennormalen n einnimmt ist bei dieser Ausrichtung der Probe identisch mit dem nominellen Einfallswinkel $\varphi_0$, den der Eingangsstrahl $k_{in}$ zur Referenzachse z des Ellipsometers 10 einnimmt.

Anders ist die Situation bei der in Figur 3 skizzierten, verkippten Ausrichtung der Probe 12. Die Darstellung von Figur 3 kann insoweit auch auf gekrümmte Probenoberflächen übertragen werden, als jede gekrümmte Oberfläche als ein Netz sehr kleiner, verkippter Oberflächen gedacht werden kann. Bei einer verkippten Probenoberfläche fallen der tatsächliche Einfallswinkel $\varphi_{eff}$ und der nominelle Einfallswinkel $\varphi_o$ auseinander, die Probennormale n fällt nicht mehr mit der Referenzachse z des Ellipsometers 10 zusammen. Die Ausrichtung der Probennormalen n kann im Eigensystem des Ellipsometers 10 mit dem Polarwinkel $\Phi$ und dem Azimutwinkel $\Theta$ beschrieben werden.

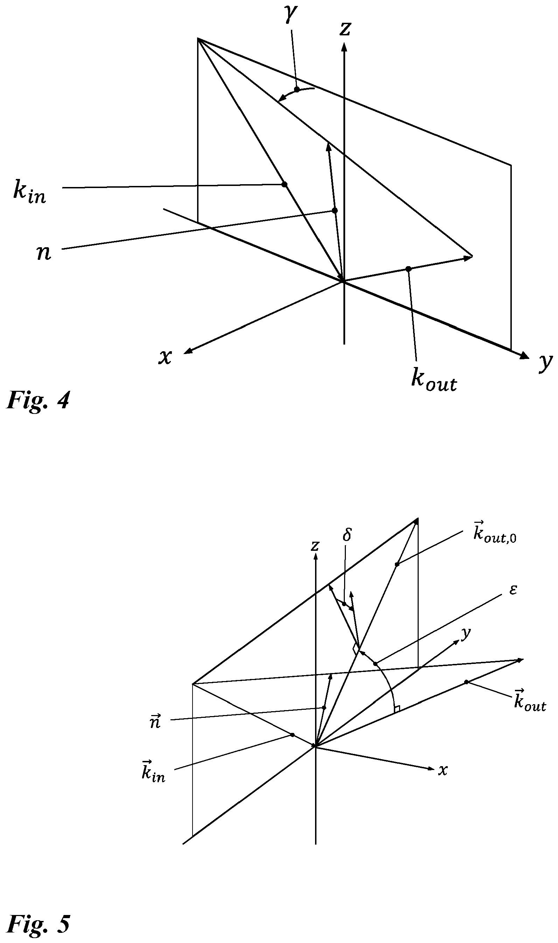

Figur 4 ist eine Skizze zur Illustration und Plausibilisierung des im Rahmen der vorangehenden Erfindungsbeschreibung diskutierten Eingangs-Rotationswinkels $\gamma$. $\gamma$ entspricht demjenigen Winkel, um den die tatsächliche Einfallsebene, d.h. die vom Eingangsstrahl $k_{in}$ und vom tatsächlichen Ausgangsstrahl $k_{out}$ aufgespannte Ebene gegenüber der nominellen Einfallsebene, d.h. yz-Ebene des Ellipsometers (Kalibrierebene), gemessen in der Ebene senkrecht zum Eingangsstrahl $k_{in}$, verkippt ist.

Figur 5 dient der Illustration und Plausibilisierung des in der obigen Beschreibung diskutierten Ausgangs-Rotationswinkels $\delta$ gemäß Näherungsmodell 1. $\delta$ entspricht demjenigen Winkel, um den die nachfolgend definierte "virtuelle Ausfallsebene" gegenüber der nominellen Ausfallsebene, d.h. derjenigen im Falle der korrekt ausgerichteten Probe, verkippt ist, gemessen in der Ebene senkrecht zum nominellen Ausgangsstrahl $k_{out,0}$,. Die "virtuelle Ausfallsebene" entspricht dabei der Ebene, die vom nominellen Ausfallsstrahl $k_{out,0}$ und demjenigen Vektor aufgespannt wird, den man aus der Probennormalen n erhielte, wenn man diese gedanklich bei einer dreidimensionalen Drehung des tatsächlichen Ausfallsstrahls $k_{out}$ auf den nominellen Ausfallsstrahl $k_{out,0}$ als starren Körper mitführte.

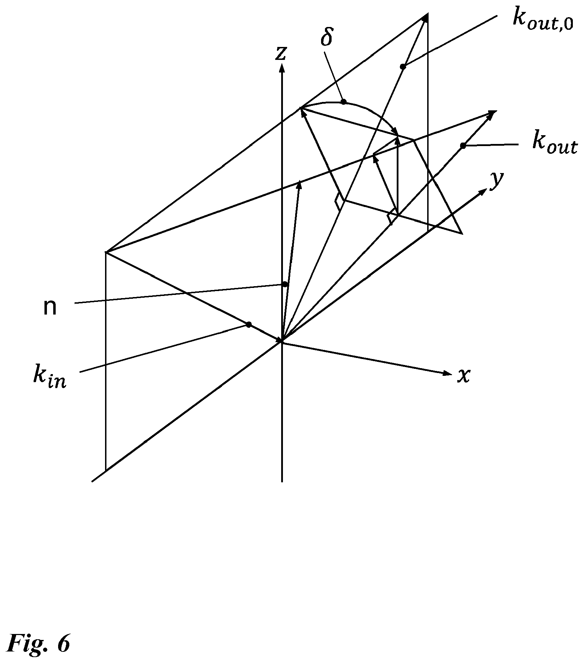

Figur 6 dient der Illustration und Plausibilisierung des in der obigen Beschreibung diskutierten Ausgangs-Rotationswinkels $\delta$ gemäß des Näherungsmodell 2. $\delta$ entspricht demjenigen Winkel, den der nachfolgend definierte Hilfsvektor mit der nominellen Ausfallsebene, d.h. derjenigen im Falle der korrekt ausgerichteten Probe, einschließt, gemessen in der Ebene senkrecht zum nominellen Ausgangsstrahl $k_{out,0}$,. Der genannte Hilfsvektor ergibt sich dabei aus dem Vektor, der senkrecht auf dem Ausgangsstrahl $k_{out}$ und in der tatsächlichen Ausfallsebene liegt, durch Projektion auf die genannte Ebene, in der $\delta$ gemessen wird, projiziert entlang der Richtung des nominellen Ausgangsstrahls $k_{out,0}$.

Bezugszeichenliste

| | |
|---|---|
| 10 | Ellipsometer |
| 12 | Probe |
| 14 | Lichtquelle |
| 18 | Polarisator |
| 20 | Analysator |
| 24 | Detektor |
| $k_{in}$ | Eingangsstrahl |
| $k_{out}$ | Ausgangsstrahl |
| $k_{out,0}$ | nomineller Ausgangsstrahl |
| n | Probennormale |
| $\varphi$ | Einfallswinkel |
| $\varphi_0$ | nomineller Einfallswinkel |
| $\varphi_{eff}$ | tatsächlicher Einfallswinkel |
| $\Phi$ | Polarwinkel |
| $\Theta$ | Azimutwinkel |
| $\gamma$ | Eingangs-Rotationswinkel |
| $-\delta$ | Ausgangs-Rotationswinkel |
| x, y, z | kartesische Koordinaten des Ellipsometer-Eigensystems |

**Patentansprüche**

1. Verfahren zur ellipsometrischen Bestimmung von Eigenschaften einer Probe (12), umfassend die Schritte:

- Positionieren der Probe (12) in einem Ellipsometer (10), wobei die Flächennormale (n) eines Messbereichs der Probenoberfläche gegenüber der Referenzachse (z) des Ellipsometers (10) verkippt ist,
- Messen der Mueller-Matrix für den Messbereich,
- Aufstellen eines zumindest nicht unterbestimmten Gleichungssystems entsprechend der Gleichsetzung der gemessenen Mueller-Matrix mit einem Matrizenprodukt aus

+ einer Rotationsmatrix um einen Eingangs-Rotationswinkel (y),
+ einer isotropen Mueller-Matrix in normierter NCS-Form und
+ einer Rotationsmatrix um einen Ausgangs-Rotationswinkel (-δ),

- Lösen des Gleichungssystems nach die zu bestimmenden Probeneigenschaften repräsentierenden Parametern,

**dadurch gekennzeichnet,**
**dass** beim Aufstellen des Gleichungssystems der Eingangs-Rotationswinkel (γ) und der Ausgangs-Rotationswinkels (-δ) als voneinander unabhängige Parameter angesetzt werden.

2. Verfahren nach Anspruch 1,
**dadurch gekennzeichnet,**
**dass** im Rahmen des Lösens des Gleichungssystems die Mueller-Parameter N, S, C und/oder die zu diesen äquivalenten ellipsometrischen Transfergrößen Δ und Ψ explizit berechnet werden.

3. Verfahren nach Anspruch 2,
weiter umfassend den Schritt:

- Ermitteln optischer und/oder mechanischer Probeneigenschaften aus den berechneten ellipsometrischen Transfergrößen Δ und Ψ durch ein numerisches Fehlerminimierungsverfahren unter Variation von Parametern eines Probenmodells.

4. Verfahren nach Anspruch 3,
**dadurch gekennzeichnet,**
**dass** im Rahmen des Fehlerminimierungsverfahrens der Einfallswinkel (φ) als zusätzlicher, zu variierender Parameter verwendet wird.

5. Verfahren nach einem der vorangehenden Ansprüche,
dass im Rahmen des Lösens des Gleichungssystems der Eingangs-Rotationswinkel (γ) und der Ausgangs-Rotationswinkel (-δ) explizit berechnet werden.

6. Verfahren nach Anspruch 5,
**dadurch gekennzeichnet,**
**dass** aus den durch das Lösen des Gleichungssystems ermittelten Rotationswinkeln (γ, -δ) die Orientierung der Flächennormalen (n) der Probenoberfläche im Messbereich relativ zur Referenzachse (z) des Ellipsometers (10) berechnet wird.

7. Verfahren nach Anspruch 1,
**dadurch gekennzeichnet,**
**dass** das Lösen des Gleichungssystems durch ein numerisches Fehlerminimierungsverfahren unter Variation von Parametern eines Probenmodells erfolgt.

8. Verfahren nach einem der vorangehenden Ansprüche,
**dadurch gekennzeichnet,**
**dass** das Ellipsometer (10) ein abbildendes Ellipsometer (10) ist.

**Claims**

1. A method for determining properties of a sample (12) by ellipsometry, comprising the steps of:

- positioning the sample (12) in an ellipsometer (10), the surface normal (n) of a measurement region of the sample surface being tilted relative to the reference axis (z) of the ellipsometer (10),
- measuring the Mueller matrix for the measurement region,
- creating an equation system, which at least is not underdetermined, equating the measured Mueller matrix on the one hand and, on the other hand, a matrix product formed of

+ a rotation matrix about an input rotation angle ($\gamma$),
+ an isotropic Mueller matrix in normalized NCS form and
+ a rotation matrix about an output rotation angle (-$\delta$).

- solving the equation system for the parameters representing the sample properties to be determined,

**characterized in that**
when setting up the equation system, the input rotation angle ($\gamma$) and the output rotation angle (-$\delta$) are set as parameters independent of one another.

2. The method according to claim 1 ,
**characterized in that**
as part of solving the equation system, the Mueller parameters N, S, C and/or the ellipsometric transfer variables $\Delta$ and $\Psi$ equivalent to these are explicitly calculated.

3. The method according to claim 2,
further comprising the step of:

- Determining optical and/or mechanical sample properties from the calculated ellipsometric transfer variables $\Delta$ and $\Psi$ by a numerical error minimization method by variation of parameters of a sample model.

4. The method according to claim 3,
**characterized in that**
as part of the error minimization method the angle of incidence ($\varphi$) is used as an additional parameter to be varied.

5. The method according to one of the preceding claims,
**characterized in that**
as part of solving the equation system, the input rotation angle ($\gamma$) and the output rotation angle (-$\delta$) are calculated explicitly.

6. The method according to claim 5,
**characterized in that**
the rotation angles (y, -$\delta$) determined by solving the equation system are used to calculate the alignment of the surface normal (n) of the sample surface in the measurement region relative to the reference axis (z) of the ellipsometer (10).

7. The method according to claim 1,
**characterized in that**
the solving of the equation system is performed by a numerical error minimization method by variation of parameters of a sample model.

8. The method according to one of the preceding claims,
**characterized in that**
the ellipsometer (10) is an imaging ellipsometer (10).

**Revendications**

1. Procédé de détermination ellipsométrique des propriétés d'un échantillon (12), comprenant les étapes suivantes :

- positionner l'échantillon (12) dans un ellipsomètre (10), la normale à la surface (n) d'une zone de mesure de la surface de l'échantillon étant inclinée par rapport à l'axe de référence (z) de l'ellipsomètre (10),
- mesurer la matrice de Mueller pour la zone de mesure,
- établir un système d'équations au moins non sous-déterminé correspondant à l'egalisation de la matrice de Mueller mesurée à un produit matriciel

+ d'une matrice de rotation autour d'un angle de rotation d'entrée (y),
+ d'une matrice de Mueller isotrope sous forme normalisée NCS et

+ d'une matrice de rotation autour d'un angle de rotation de sortie (-δ),

- résoudre le système d'équations selon ceux paramètres représentant les propriétés de l'échantillon à déterminer,

**caractérisé en ce**
**que**, lors de l'établissement du système d'équations, l'angle de rotation d'entrée (γ) et l'angle de rotation de sortie (-δ) sont considérés comme des paramètres indépendants les uns des autres.

2. Procédé selon la revendication 1,
**caractérisé en ce**
**que**, dans le cadre de la résolution du système d'équations, les paramètres de Mueller N, S, C et/ou les grandeurs de transfert ellipsométriques Δ et Ψ sont calculés explicitement.

3. Procédé selon la revendication 2,
comprenant en outre l'étape consistant à :

- déterminer les propriétés optiques et/ou mécaniques de l'échantillon à partir des grandeurs de transfert ellipsométriques Δ et Ψ calculées par un procédé numérique de minimisation des erreurs en faisant varier les paramètres d'un modèle d'échantillon.

4. Procédé selon la revendication 3,
**caractérisé en ce**
**que**, dans le cadre du procédé de minimisation des erreurs, l'angle d'incidence (φ) est utilisé comme paramètre supplémentaire à faire varier.

5. Procédé selon l'une des revendications précédentes,
**caractérisé en ce**
**que**, dans le cadre de la résolution du système d'équations, l'angle de rotation d'entrée (γ) et l'angle de rotation de sortie (-δ) sont calculés explicitement.

6. Procédé selon la revendication 5,
**caractérisé en ce**
**que** l'orientation de la normale à la surface (n) de l'échantillon dans la zone de mesure par rapport à l'axe de référence (z) de l'ellipsomètre (10) est calculée à partir des angles de rotation (y, -δ) déterminés par la résolution du système d'équations.

7. Procédé selon la revendication 1,
**caractérisé en ce**
**que** la résolution du système d'équations est effectuée par un procédé numérique de minimisation des erreurs en faisant varier les paramètres d'un modèle d'échantillon.

8. Procédé selon l'une des revendications précédentes,
**caractérisé en ce**
**que** l'ellipsomètre (10) est un ellipsomètre d'imagerie (10).

**Fig. 1**

**Fig. 2**

**Fig. 3**

$\gamma$

$z$

$k_{in}$

$n$

$x$

$k_{out}$

**Fig. 4**

$z$

$\delta$

$\vec{k}_{out,0}$

$\varepsilon$

$\vec{k}_{out}$

$y$

$\vec{n}$

$\vec{k}_{in}$

$x$

**Fig. 5**

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7800756 B2
- US 6741353 B1
- US 7768660 B1

**In der Beschreibung aufgeführte Nicht-Patentliteratur**

- **W. LI.** Characterization of curved surface layer by Mueller matrix ellipsometry. *Journal of Vacuum Science & Technology B,* 2016, vol. 34 (020602, http://dx.doi.org/10.1116/1.4943952
- **TOMPKINS, H.G., ; IRENE, E.A.** Handbook of ellipsometry. William Andrew Pub.; Springer, 2005
- **TSURU, T.** Tilt-ellipsometry of object surface by specular reflection for three-dimensional shape measurement. *Optics Express,* 2013, vol. 21 (5), 6625-6632